# EUROPEAN PATENT APPLICATION

(11) **EP 4 432 420 A1**
(43) Date of publication of application: **18.09.2024**
(21) Application number: 23181584.6
(22) Date of filing: 26.06.2023
(51) Int. Cl.: H01M 10/42, H01M 10/48, H01M 50/30, H01M 50/581

(54) **CELL MONITORING APPARATUS AND BATTERY PACK INCLUDING THE APPARATUS**

(30) Priority: 17.03.2023 KR 20230035397
(71) Applicant: Samsung SDI Co., Ltd., Yongin-si, Gyeonggi-do 17084 (KR)
(72) Inventor: LIM, Hantaek, Yongin-si 17084 (KR)
(74) Representative: Marks & Clerk LLP

(57) **Abstract**

The cell monitoring apparatus includes a plurality of vent hole opening detectors and a controller. The plurality of vent hole opening detectors are located in correspondence with each of a plurality of cells, includes a plurality of missing holes formed corresponding to the position of the vent hole of the corresponding cell, and detects whether or not the vent hole formed in each of the plurality of cells is open using the plurality of missing holes. The controller detects a cell in which an event has occurred based on whether a vent hole formed in each of the plurality of cells is open.

## Description

### BACKGROUND

### (a) Field

The present disclosure relates to a cell monitoring apparatus and a battery pack including the apparatus.

### (b) Description of the Related Art

In general, for diagnosing thermal runaway of a battery system, a method of monitoring temperature in a battery module and voltages of battery cells or a method using a pressure sensor is mainly used.

However, the thermal runaway diagnosis method makes it difficult to clearly identify which battery cell started thermal runaway or how thermal propagation progressed.

### SUMMARY

At least one of the embodiments is to provide a cell monitoring apparatus capable of detecting a battery cell in which thermal runaway has occurred and a battery pack including the apparatus.

According to one aspect, a cell monitoring apparatus is provided. The cell monitoring apparatus includes: a plurality of vent hole opening detectors that are located in correspondence with each of a plurality of cells, includes a plurality of missing holes formed corresponding to the position of the vent hole of the corresponding cell, and detects whether or not the vent hole formed in each of the plurality of cells is open using the plurality of missing holes; and a controller that detects a cell in which an event has occurred based on whether a vent hole formed in each of the plurality of cells is open.

Each of the plurality of vent hole opening detectors may include a first resistor and a second resistor connected in series between a power terminal supplying a power voltage and the ground, and having a contact point connected to the controller, and the first resistor or the second resistor may be located in an area where the plurality of missing holes are located, or a first metal wiring pattern for connection with the first resistor or a second metal wiring pattern for connection with the second resistor may be located in an area where the plurality of missing holes are located.

The controller may determine the opening of the vent hole from the voltage of the contact point, and determine a cell in which the event has occurred from the opening of the vent hole.

The plurality of missing holes may be formed at set intervals along the circumference of the vent hole.

The event may include thermal runaway.

According to another aspect, a battery pack is provided. The battery pack includes: a plurality of cells each formed with a plurality of vent holes; and a cell monitoring apparatus that detects whether the vent hole of each cell is open using a plurality of missing holes formed corresponding to the location of the vent hole of each cell, and detects a cell in which an event has occurred based on whether each cell is open.

The plurality of missing holes may be formed at set intervals along the circumference of the vent hole.

The cell monitoring apparatus may include a plurality of vent hole opening detectors for detecting whether a vent hole formed in each of the plurality of cells is open using the plurality of missing holes, each of the plurality of vent hole opening detectors may include a first resistor and a second resistor connected in series between a power terminal supplying a power voltage and a ground, and the first resistor or the second resistor may be located in an area where the plurality of missing holes are located, or a first metal wiring pattern for connection with the first resistor or a second metal wiring pattern for connection with the second resistor may be located in an area where the plurality of missing holes are located.

The cell monitoring apparatus further may further include a controller for determining whether the vent hole is open based on the voltage of the contact point.

A resistor located in an area where the plurality of missing holes are located or a resistor connected to a metal wiring pattern located in an area where the plurality of missing holes are located may be opened if an event of a corresponding cell occurs.

At least some of the above features that accord with the invention and other features according to the invention are set out in the claims.

### BRIEF DESCRIPTION OF THE DRAWINGS

FIG. 1 is a perspective view of a battery pack according to an embodiment.
FIG. 2 is a diagram illustrating a cell monitoring apparatus according to an embodiment.
FIG. 3 is a diagram illustrating the vent hole opening detector shown in FIG. 2.
FIG. 4 is a diagram showing a position of a resistor shown in FIG. 3.
FIG. 5 is a view showing an example of a position of a resistor in the vent hole opening detector shown in FIG. 2.
FIG. 6 is a flowchart illustrating a cell monitoring method of a cell monitoring apparatus according to an embodiment.

### DETAILED DESCRIPTION OF THE EMBODIMENTS

Hereinafter, embodiments of the disclosure will be described in detail with reference to the attached drawings so that a person of ordinary skill in the art may easily implement the disclosure. As those skilled in the art would realize, the described embodiments may be modified in various different ways, all without departing from the scope of the claims. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, when a part is referred to "include" a certain element, it means that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, when a component is referred to be "connected" with another component, it includes not only the case where two components are "directly connected" but also the case where two components are "indirectly or non-contactedly connected" with another component interposed therebetween, or the case where two components are "electrically connected." On the other hand, when an element is referred to as "directly connected" to another element, it should be understood that no other element exists in the middle.

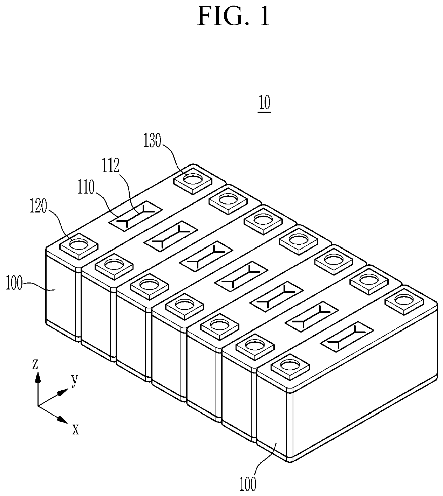

FIG. 1 is a perspective view of a battery pack according to an embodiment.

Referring to FIG. 1, the battery pack 10 may include a plurality of cells 100 inserted in an inner space of a pack case.

A plurality of cells 100 may be connected in series or parallel to each other.

The cell 100 may accommodate an electrode assembly and an electrolyte inside a cell case constituting a body, and may form a vent hole 110 and electrode terminals 120 and 130 on an outer surface of the cell case.

The vent hole 110 may be generally kept closed. If an event such as thermal runaway of the cell 100 occurs and gas or flame is generated inside the cell 100, the vent hole may be opened to output gas or flame to the outside of the cell 100. For example, the vent hole 110 may be provided in such a way that a notch 112 is formed at a specific portion so that the specific portion is broken if the internal pressure of the cell 100 increases.

The cell 100 may be configured as a prismatic cell. In this case, the vent hole 110 may be configured at the top of the cell 100 in an upright state. Alternatively, the cell 100 may be configured as a cell of another shape (e.g., a cylindrical cell), and the shape of the cell 100 is not limited thereto.

The cells 100 inserted in one pack case may be arranged so that the vent holes 110 of the cells 100 are arranged side by side while facing the same direction (Z-axis direction).

In embodiments, there is provided cell monitoring apparatus for a battery, wherein the battery includes a plurality of cells. Each cell includes a vent hole. The cell monitoring apparatus being configured to detect whether the vent hole of each cell is open using a plurality of missing holes formed corresponding to the location of the vent hole of each cell, and to detect a cell in which an event has occurred based on whether each cell is open.

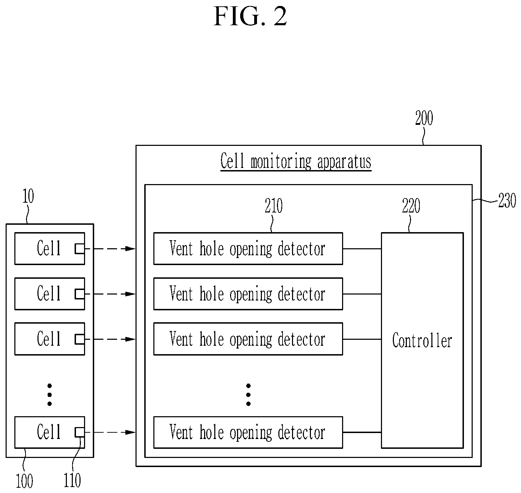

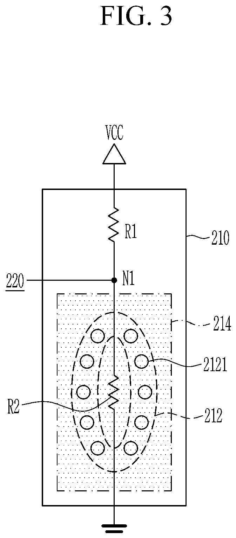

FIG. 2 is a diagram illustrating a cell monitoring apparatus according to an embodiment, and FIG. 3 is a diagram illustrating the vent hole opening detector shown in FIG. 2.

Referring to FIG. 2, the cell monitoring apparatus 200 may include a plurality of vent hole opening detectors 210 and a controller 220. The plurality of vent hole opening detectors 210 and the controller 220 may be mounted on a printed circuit board (PCB) 230.

The plurality of vent hole opening detectors 210 respectively correspond to the plurality of cells 100 constituting the battery pack 10, and may detect whether the vent holes 110 formed in the corresponding cells 100 are open.

In embodiments, the cell monitoring apparatus may include missing holes. In embodiments, a missing hole may be a non-through hole. The purpose of the non-through holes is that, if they are placed in the PCB, in the event of thermal runaway, the entire PCB will not be destroyed, only the part of the non-through holes may be destroyed. A non-through hole may also be referred to as a blind hole. In embodiments, a missing hole may be a perforated area.

Referring to FIG. 3, each of the plurality of vent hole opening detectors 210 may include a missing hole group 212 and resistors R1 and R2. In FIG. 3, only one vent hole opening detector 210 is shown for convenience.

The missing hole group 212 may be disposed in an area 214 corresponding to a vent hole formed in a corresponding cell.

The missing hole group 212 may include a plurality of missing holes 2121 spaced apart from each other at predetermined intervals along the circumference of the vent hole 110 formed in the corresponding cell 100 on the PCB 230.

The resistors R1 and R2 may constitute a resistive voltage divider circuit. One end of the resistor R1 may be connected to a power terminal supplying the power voltage VCC, the other end of the resistor R2 may be connected to one end of the resistor R2, and the other end of the resistor R2 may be connected to ground. In this case, the resistor R2 may be disposed in an area 214 where the missing hole group 212 is located. A node N1 corresponding to a contact point between the resistors R1 and R2 may be connected to the controller 220. The power supply voltage VCC is divided by the resistors R1 and R2, and the voltage of the node N1 divided by the resistors R1 and R2 may be transmitted to the controller 220.

Again referring to FIG. 2, the controller 220 may detect a cell in which an event such as thermal runaway has occurred from the voltages of the node N1 transmitted from the plurality of vent hole opening detector 210.

The controller 220 may include a plurality of input terminals, and the voltages of the node N1 transmitted from the plurality of vent hole opening detectors 210 may be input through different input terminals of the controller 220. Accordingly, the controller 220 may detect a cell in which an event has occurred from the voltages of the node N1 transmitted from the plurality of vent hole opening detectors 210. Alternatively, the voltages of the node N1 transmitted from several event hole opening detectors 210 may be input to one input terminal of the controller 220. In this case, the voltages of the node N1 transmitted from the event hole opening detectors 210 detecting whether the vent holes 110 of adjacent cells 100 are open may be input to one input terminal of the controller 220.

The controller 220 may be an analog front end (AFE) integrated circuit (IC). The controller 220 may be a microcontroller or a radio frequency (RF) IC.

If an event such as thermal runaway occurs, the vent hole 110 of the cell 100 is opened by the pressure of the gas generated inside the cell 100. Accordingly, a space between the missing holes 2121 formed corresponding to the corresponding cell 100 may be opened, and an area 214 where the missing hole group 212 is located may be damaged. Then, the resistor R2 disposed in the area 214 where the missing hole group 212 is located is opened. The opening of the resistor R2 may mean that the circuit is disconnected.

The voltage at the node N1 may vary depending on whether the resistor R2 is open or shorted. Accordingly, the controller 220 may detect a cell in which an event such as thermal runaway has occurred based on the voltage of the node N1.

For example, if the resistance values of the resistors R1 and R2 are 10K and the power supply voltage is 5 V, the voltage at the node N1 becomes 2.5 V due to the resistive voltage division, and the voltage of 2.5 V may be transmitted to the controller 220. At this time, a thermal runaway occurred in one of the cells, and the missing hole group 212 formed corresponding to the cell in which the thermal runaway occurred was destroyed, the resistor R2 disposed in the area 214 where the missing hole group 212 was located is open. Then, the voltage of the node N1 becomes 5 V by the resistive voltage division, and the voltage of 5 V can be transmitted to the controller 220. The controller 220 may check the voltage of 5 V and detect a cell in which an event such as thermal runaway has occurred.

If a cell in which an event has occurred is detected, the controller 220 may stop charging or discharging of the battery pack 10.

The cell monitoring apparatus 200 may be implemented as a battery management system (BMS) that monitors the state of the battery pack 10.

The cell monitoring apparatus 200 may include at least one processor. At least one processor may be implemented in various types such as an application processor (AP), a central processing unit (CPU), a graphics processing unit (GPU), and the like. The at least one processor may store program commands for implementing at least some functions of the plurality of vent hole open detectors 210 and the controller 220 in a memory and execute the program commands stored in the memory to perform a cell monitoring operation.

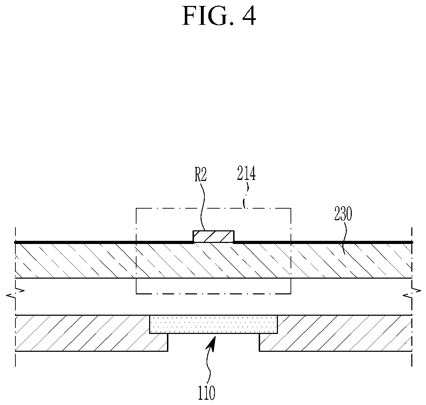

FIG. 4 is a diagram showing a position of a resistor shown in FIG. 3.

Referring to FIG. 4, the resistor R2 may be disposed in the area 214 where the missing hole group 212 is located.

As described above, the missing hole group 212 may be positioned to correspond to the vent hole 110 formed in the corresponding cell 100.

Since the resistor R2 is disposed in the area 214 where the missing hole group 212 is located, if thermal runaway occurs in any one cell, the resistor R2 disposed in the area 214 where the missing hole group 212 corresponding to the cell where the thermal runaway has occurred is located may be open.

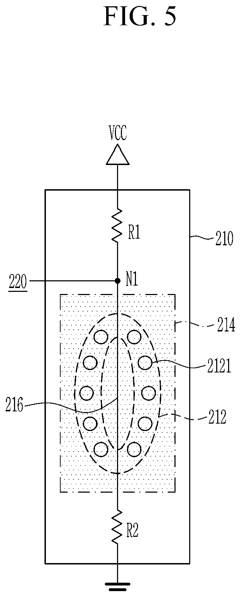

FIG. 5 is a view showing an example of a position of a resistor in the vent hole opening detector shown in FIG. 2.

Referring to FIG. 5, resistor R2 may be located outside the area 214 where the missing hole group 212 is located. The node N1 and the resistor R2 may be connected by a metal wiring pattern 216, and the metal wiring pattern 216 may be formed to pass through the area 214 where the missing hole group 212 is located.

In this way, if thermal runaway occurs in one cell, in the area 214 where the missing hole group 212 corresponding to the cell where the thermal runaway has occurred is located may be damaged and the metal wiring pattern 216 may be cut off. Accordingly, the resistor R2 may be opened.

As such, the cell monitoring apparatus 200, as shown in FIGS. 3 to 5, has a plurality of missing holes 2121 and a resistor R2 and/or a metal wiring pattern 216 for connection with the resistor R2 in the region 214 corresponding to the vent hole 110, it is possible to accurately identify a cell in which an event such as thermal runaway has occurred.

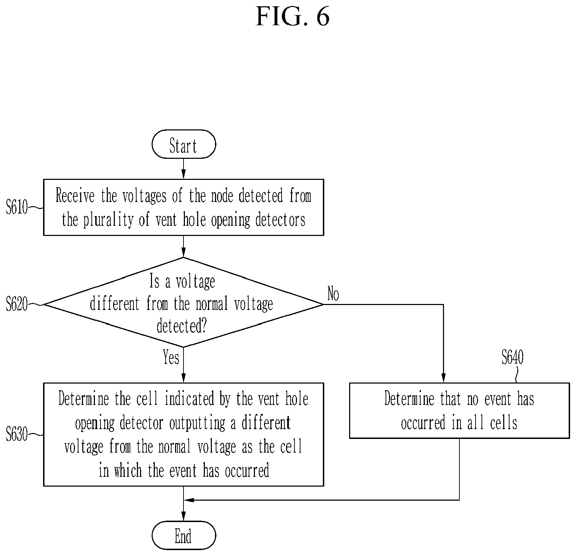

FIG. 6 is a flowchart illustrating a cell monitoring method of a cell monitoring apparatus according to an embodiment.

Referring to FIG. 6, the controller 220 of the cell monitoring apparatus 200 may receive the voltages of the node N1 detected from the plurality of vent hole opening detectors 210 (S610).

The controller 220 of the cell monitoring apparatus 200 may check whether a voltage different from a normal voltage is detected among the voltages of the node N1 detected by the plurality of vent hole opening detector 210. The normal voltage may refer to the voltage detected in the normal state of the cell as the voltage of the node N1, and the normal voltage may refer to 2.5 V in the case of the above-described example. The voltage different from a normal voltage is the voltage of the node N1 detected if an event such as thermal runaway occurs, and may refer to 5 V in the case of the example described above.

If a voltage different from the normal voltage is detected (S620), the controller 220 of the cell monitoring apparatus 200 may determine the cell indicated by the vent hole opening detector 210 outputting a different voltage from the normal voltage as the cell in which the event has occurred (S630).

Meanwhile, if a voltage different from the normal voltage is not detected (S620), the controller 220 of the cell monitoring apparatus 200 may determine that no event has occurred in all cells (S640).

According to at least one embodiment, it is possible to detect a cell in which thermal runaway has occurred, and based on this, a bad sensor and an actual thermal runaway situation can be distinguished, an accurate situation can be notified to passengers, and a diagnosis mode can be accurately implemented.

Although the embodiments have been described in detail above, the scope of the present disclosure is not limited thereto, and various modifications and improvements made by those skilled in the art using the basic concept of the present disclosure defined in the following claims are also included in the scope of the present disclosure.

### <Description of symbols>

10: battery pack
100: cell
100: cell
110: vent hole
112: notch
120, 130: electrode terminal
200: cell monitoring apparatus
210: vent hole open detector
220: controller
230: PCB
212: missing hole group
2121: missing hole

Further understanding of the invention may be obtained from the embodiments described in the following numbered clauses:
1. A cell monitoring apparatus comprising:
   a plurality of vent hole opening detectors that are located in correspondence with each of a plurality of cells, comprises a plurality of missing holes formed corresponding to the position of the vent hole of the corresponding cell, and detects whether or not the vent hole formed in each of the plurality of cells is open using the plurality of missing holes; and
   a controller that detects a cell in which an event has occurred based on whether a vent hole formed in each of the plurality of cells is open.
2. The cell monitoring apparatus of clause 1, wherein
   each of the plurality of vent hole opening detectors comprises a first resistor and a second resistor that are connected in series between a power terminal supplying a power voltage and the ground, and having a contact point connected to the controller, and
   the first resistor or the second resistor is located in an area where the plurality of missing holes are located, or a first metal wiring pattern for connection with the first resistor or a second metal wiring pattern for connection with the second resistor is located in an area where the plurality of missing holes are located.
3. The cell monitoring apparatus of clause 2, wherein
   the controller determines the opening of the vent hole from the voltage of the contact point, and determines a cell in which the event has occurred from the opening of the vent hole.
4. The cell monitoring apparatus of clause 1, wherein
   the plurality of missing holes are formed at set intervals along the circumference of the vent hole.
5. The cell monitoring apparatus of clause 1, wherein
   the event comprises thermal runaway.
6. A battery pack comprising:
   a plurality of cells each formed with a plurality of vent holes; and
   a cell monitoring apparatus that detects whether the vent hole of each cell is open using a plurality of missing holes formed corresponding to the location of the vent hole of each cell, and detects a cell in which an event has occurred based on whether each cell is open.
7. The battery pack of clause 6, wherein
   the plurality of missing holes are formed at set intervals along the circumference of the vent hole.
8. The battery pack of clause 6, wherein
   the cell monitoring apparatus comprises a plurality of vent hole opening detectors for detecting whether a vent hole formed in each of the plurality of cells is open using the plurality of missing holes,
   each of the plurality of vent hole opening detectors comprises a first resistor and a second resistor connected in series between a power terminal supplying a power voltage and a ground, and
   the first resistor or the second resistor is located in an area where the plurality of missing holes are located, or a first metal wiring pattern for connection with the first resistor or a second metal wiring pattern for connection with the second resistor is located in an area where the plurality of missing holes are located.
9. The battery pack of clause 8, wherein
   the cell monitoring apparatus further comprises a controller for determining whether the vent hole is open based on the voltage of the contact point.
10. The battery pack of clause 8, wherein
   a resistor located in an area where the plurality of missing holes are located or a resistor connected to a metal wiring pattern located in an area where the plurality of missing holes are located is opened if an event of a corresponding cell occurs.

## Claims

1. A cell monitoring apparatus for a battery, wherein the battery comprises a plurality of cells, each cell comprising a vent hole, the cell monitoring apparatus being configured to:
detect whether the vent hole of each cell is open using a plurality of missing holes formed corresponding to the location of the vent hole of each cell; and
detect a cell in which an event has occurred based on whether each cell is open.

2. A cell monitoring apparatus as claimed in claim 1, comprising:
a plurality of vent hole opening detectors that are located in correspondence with each of a plurality of cells, wherein each vent opening hole detector comprises a plurality of missing holes formed corresponding to the position of the vent hole of the corresponding cell, and is configured to detect whether or not the vent hole formed in each of the plurality of cells is open using the plurality of missing holes; and
a controller configured to detect a cell in which an event has occurred based on whether a vent hole formed in each of the plurality of cells is open.

3. The cell monitoring apparatus as claimed in claim 2, wherein
each of the plurality of vent hole opening detectors comprises a first resistor and a second resistor that are connected in series between a power terminal supplying a power voltage and the ground, and has a contact point connected to the controller, and
the first resistor or the second resistor is located in an area where the plurality of missing holes are located, or a first metal wiring pattern for connection with the first resistor or a second metal wiring pattern for connection with the second resistor is located in an area where the plurality of missing holes are located.

4. The cell monitoring apparatus as claimed in claim 3, wherein
a resistor located in an area where the plurality of missing holes are located or a resistor connected to a metal wiring pattern located in an area where the plurality of missing holes are located is configured to be opened if an event of a corresponding cell occurs.

5. The cell monitoring apparatus as claimed in claim 3 or claim 4, wherein
the controller is configured to determine the opening of the vent hole from the voltage of the contact point, and to determine a cell in which the event has occurred from the opening of the vent hole.

6. The cell monitoring apparatus as claimed in any preceding claim, wherein
the plurality of missing holes are formed at set intervals along the circumference of the vent hole.

7. The cell monitoring apparatus as claimed in any preceding claim, wherein
the event comprises thermal runaway.

8. A battery pack comprising:
a plurality of cells each formed with a plurality of vent holes; and
a cell monitoring apparatus according to any preceding claim.

## Amended claims

### Amended claims in accordance with Rule 137(2) EPC.

1. A cell monitoring apparatus (200) for a battery (10), wherein the battery comprises a plurality of cells (100), each cell comprising a vent hole (110), the cell monitoring apparatus comprising:
a printed circuit board, PCB (230);
a plurality of vent hole opening detectors (210), mounted on the PCB, that are located in correspondence with each of a plurality of cells, wherein each of the plurality of vent opening hole detectors comprises:
a plurality of missing holes (2121) formed corresponding to the position of the vent hole of the corresponding cell, each said missing hole comprising at least one of a non-through hole, a blind hole, and a perforated area;
a first resistor (R1) and a second resistor (R2) that are connected in series between a power terminal supplying a power voltage and the ground; and
a contact point connected to the controller,
wherein the first resistor or the second resistor is located in an area where the plurality of missing holes are located, or a first metal wiring pattern for connection with the first resistor or a second metal wiring pattern for connection with the second resistor is located in an area where the plurality of missing holes are located, and wherein the first resistor and the second resistor constitute a resistive voltage divider circuit,
a controller (220), mounted on the PCB and configured to determine an opening of one of said vent holes from the voltage of the contact point, and to determine a cell in which an event has occurred from the opening of the vent hole.

2. The cell monitoring apparatus as claimed in claim 1, wherein the first resistor or the second resistor is configured to be opened if the event of a corresponding cell occurs.

3. The cell monitoring apparatus as claimed in any preceding claim, wherein
the plurality of missing holes are formed at set intervals along the circumference of the vent hole.

4. The cell monitoring apparatus as claimed in any preceding claim, wherein
the event comprises thermal runaway.

5. A battery pack comprising:
a plurality of cells each formed with a plurality of vent holes; and
a cell monitoring apparatus according to any preceding claim.
